Europäisches Patentamt

(19) European Patent Office

Office européen des brevets

(11) Publication number: **0 010 825**
**A1**

(12) # EUROPEAN PATENT APPLICATION

(21) Application number: **79300360.9**

(22) Date of filing: **09.03.79**

(51) Int. Cl.³: **B 60 J 7/06,** B 60 J 7/18, B 60 J 7/22

(30) Priority: **27.10.78 ES 239040**

(43) Date of publication of application: **14.05.80**
**Bulletin 80/10**

(84) Designated Contracting States: **BE CH DE FR GB IT LU NL SE**

(71) Applicant: **TALLERES ALFE, S.L., Trav. Avda. de la Jota, s/n, Zaragoza (ES)**

(72) Inventor: **Longas, Alvaro Ariza, Trav. Avda. de la Jota, s/n, Zaragoza (ES)**

(74) Representative: **Corfield, Peter Ralph et al, MARKS & CLERK Alpha Tower, ATV Centre, Birmingham B1 1TT (GB)**

(54) **Vehicle sliding roof.**

(57) Vehicle sliding roof comprising a rectangular shaped frame (4) over which can extend a strip (1) made from flexible material attached at the rear to a stationary plate (8) secured to the frame and at the front to a movable plate (16) joined to a mechanism case (13) accomodating opening and closing mechanisms, in such a way that the flexible material strip (1) may be placed in the desired position by pressing the movable plate (16) against the steel bodywork comprising the vehicle roof.

EP 0 010 825 A1

ACTORUM AG

COMPLETE DOCUMENT

0010825

The present invention is concerned with a vehicle
sliding roof, of which the closure member is a strip made
from flexible material.

The difficulty with this kind of closure arises at the
time when the flexible strip is positioned to effect sealing
of the window, because such seal is either faulty, with
consequent discomfort for persons riding inside the vehicle,
or alternatively it requires complex mechanisms that are
difficult to construct.

In order to overcome these difficulties, the closure
arrangement for a vehicle sliding rood of the invention is
characterised by a rectangular frame (4) over which extends
a strip (1) of flexible material, this material being
supported by transverse rods (2) and attached at its rear
edge to a plate (8) that is secured to the frame (4), while
its front edge is attached to a movable plate (16) linked
to opening and closing mechanisms which are provided with
means whereby said movable plate (16) can be released from
and secured to steel bodywork of the vehicle.

The construction preferably has sections from which
the frame is constructed whose outside shape is such as to
enable them to be securely affixed to the vehicle bodywork,
while the insides of the lengthwise or side members are
shaped with guides, and the front member is conveniently
suitably slotted so as to accommodate claws which, when
engaged, prevent the strip of flexible material from folding.

The front edge of the strip of flexible material may be
secured to a slightly curved plate, this in turn being
attached to slotted angle bars which are pivotally assembled
together inside a case that accommodates the closing
mechanism, and are attached to eccentric parts provided

with securing claws.    When said eccentric parts rotate,
the plate is made to tip, and the securing claws to move
in such a way that both latter and former travel to a
position wherein the covering strip is folded into a
different position wherein the claws engage with the front
edge of the frame and prevent such folding, while simultaneously the plate is pressed against the steel roof of the
vehicle, thus achieving a perfect seal.

The mechanism case, which contains the eccentric mechanisms,
may be provided with sliding blocks at its sides, which
travel inside the guides along the frame so as to enable
said case to be moved.

The guides along the sides of the frame preferably
also accommodate further sliding blocks which are attached
to transverse rods connected to another and to the
mechanism case by means of links, in such a way that they
act as ribs.    The strip of flexible material is conveniently
secured to each one of these rods, and its rear edge is
attached to a slightly curved plate affixed to the rearmost
end of the frame.    The arrangement of the ribs together
with the front plate and its ability to slide, is such that
it is feasible to fold the strip of flexible material, or to
unfold it and close the opening.

In order for the side edges of the flexible strip to
fit snugly against the vehicle roof when closed, cords may
be fitted lengthwise through said strip, and attached to the
movable plate and to the rearmost stationary plate.

Moreover, the front of the frame for the window may be
fitted with a hinged flap, which is able to adopt any one of
numerous positions and by adjustment alters the flow of air
into the vehicle, thus performing the function of a wind
deflector.

- 4 -                                    0010825

The invention will now be described by way of example with reference to the accompanying drawings, in which:

Figure 1 is a general arrangement plan view of the construction according to this invention,

Figure 2 is a sectional view across the plane indicated in Figure 1, where the device can be seen in the half open position,

Figure 3 is an enlarged transverse sectional view of the mechanism case, in which the position of the front plate and its support are diagrammatically shown,

Figure 4 is a view of the mechanism case from above,

Figure 5 is a cross sectional view on the plane indicated in Figure 4, in which the handle withdrawing mechanism can be seen, and

Figure 6 illustrates the bottom of the mechanism case, and shows specifically, the area in which the closing motion handle is located.

A sliding roof device for a vehicle to be fitted to a vehicle roof as shown comprises a frame (4) that is rectangular in shape and constructed from metal sections whose shape is such that the outside of the frame assembly may be mated with and attached to the steel bodywork comprising the motor vehicle roof, while the inside shape of the side or longitudinal members form guideways. The front member of said frame possesses housings for accomodating and allowing engagement therein of claws (25), together with other housings wherein studs (17) may enter to assist in centralising a mechanism case (13).

Moreover, said frame (4) is provided with strengtheners at its rear (3) and its front (7), which are secured to the vehicle bodywork.

The closure member of the sliding roof is in the form of a strip of flexible material (1) whose rearmost edge is attached to a curved stationary plate (8) which in turn is secured to the frame (4), and whose foremost edge is attached to a further curved movable plate (16), being capable of movement and secured to slotted angle bars (10), which are pivotally assembled together inside the mechanism case (13).

Along its length between both these plate (8 and 16) flexible material strip is provided with transverse rods (2) attached thereto, of which one possesses two sliding blocks (9) and is joined to its neighbouring rod (2) by means of links (5). The transverse rod (2) which is located closest to the front movable plate (16) is also joined thereto by means of links (5).

Cords (6) are positioned along the side edges of the flexible material strip (1), and they are attached to the rear stationary plate (8) and to the front movable plate (16) so that when the latter travels away from the former, said cords (6) become tautened and the side edges of the flexible material strip fit snugly upon the motor vehicle roof.

Mechanism case (13) is located beneath the front movable plate (16), and the outside thereof is provided with an operating handle 22, by means of which the mechanisms inside said case (13) can be moved. This operating handle (22) is linked by means of a connecting strip (21) to a thruster member (19), which is guided by a body (20), and it is connected by means of link pieces (18 and 26) to two eccentric parts (11) which swivel about their respective axes (23), where each one of said parts (11) possesses a pivoted claw (25) protruding from the front of the mechanism (13). Eccentric parts (11) furthermore possess protrusions which enter inside oblique slots (12) in angle bars (10).

The operating handle (22), which is located on the outside of the mechanism case (13), is concealed inside a housing provided for the purpose on said mechanism case (13). The operating handle (22) is connected to a withdrawing mechanism comprised of a withdrawal lever (27) and a spring (28).

In order to enable the mechanism case (13) to travel along the length of the roof opening, it is provided with two sliding blocks (24). Moreover, the front of said case (13) is fitted with the studs (17) to assist in centering the case upon entering the holes provided for this purpose on the front edge of frame (4).

Furthermore, a wind deflector (15) is attached by hinges (14) to the front of frame (4), and is capable of turning and being positioned at will at different angles so as to perform its function of deflecting the wind.

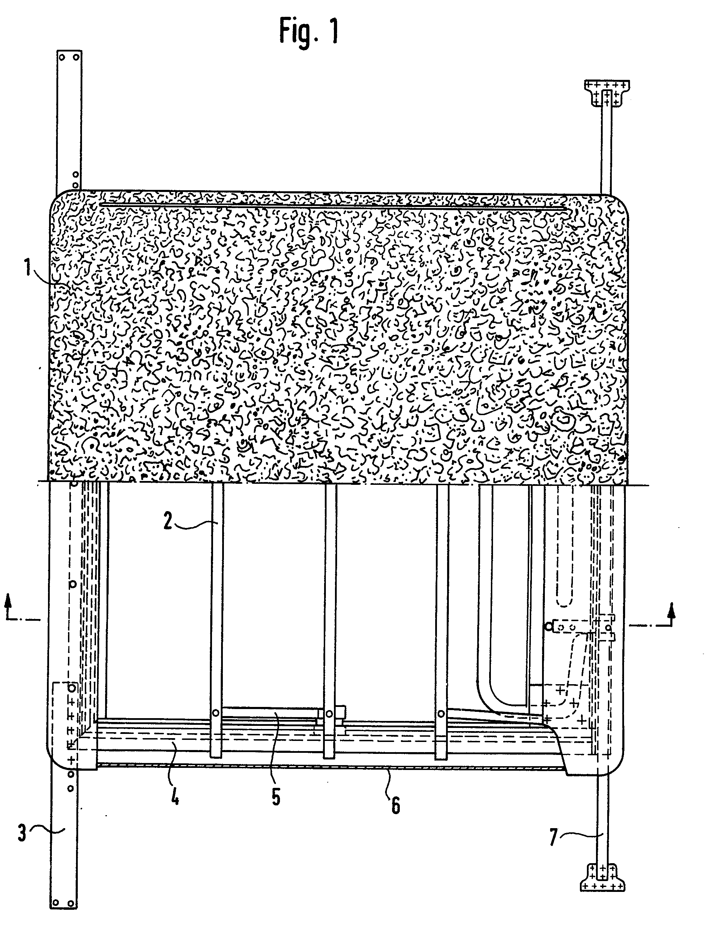

When the motor vehicle roof sliding is in the position where the flexible material strip (1) covers the opening completely, the claws (25) are engaged within their housings on the inside of the frame (4) front member, to prevent said flexible material strip (1) from folding. This position is that shown in Figure 1.

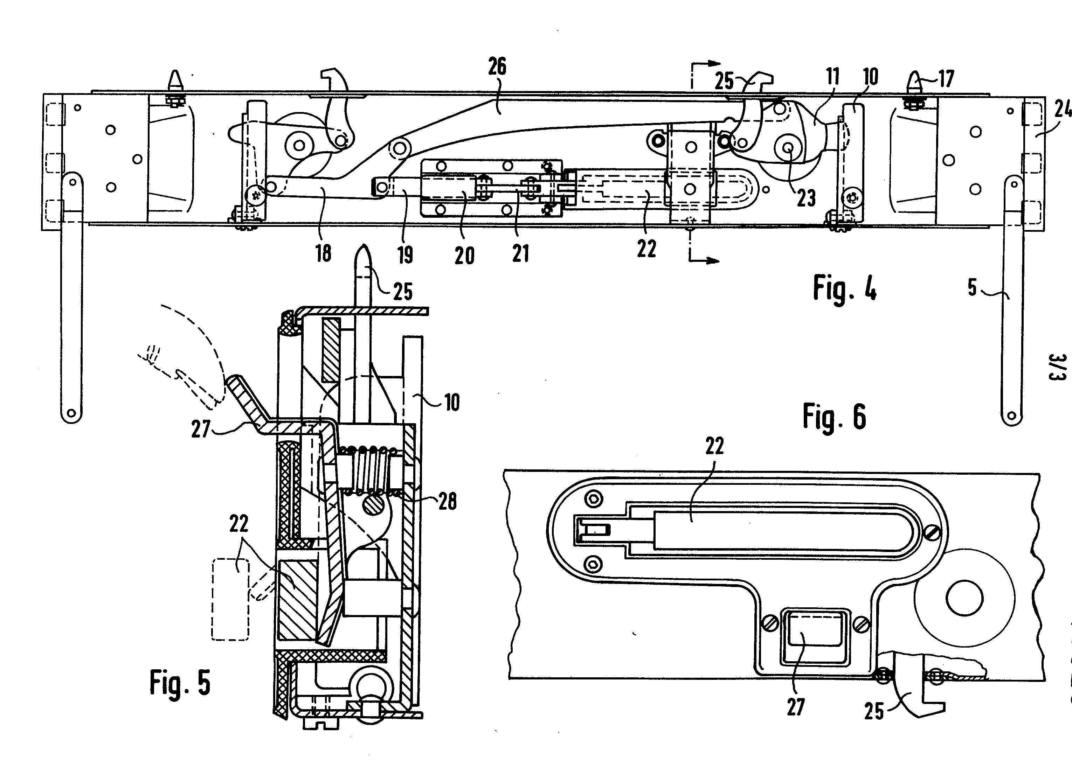

In order to open the window, the first step is to press upon the withdrawal lever (27), which is located on the bottom of the mechanism case (13), so that the operating lever (22) is forced out of its housing by a sufficient amount to enable it to be grasped.    (See Figure 5).

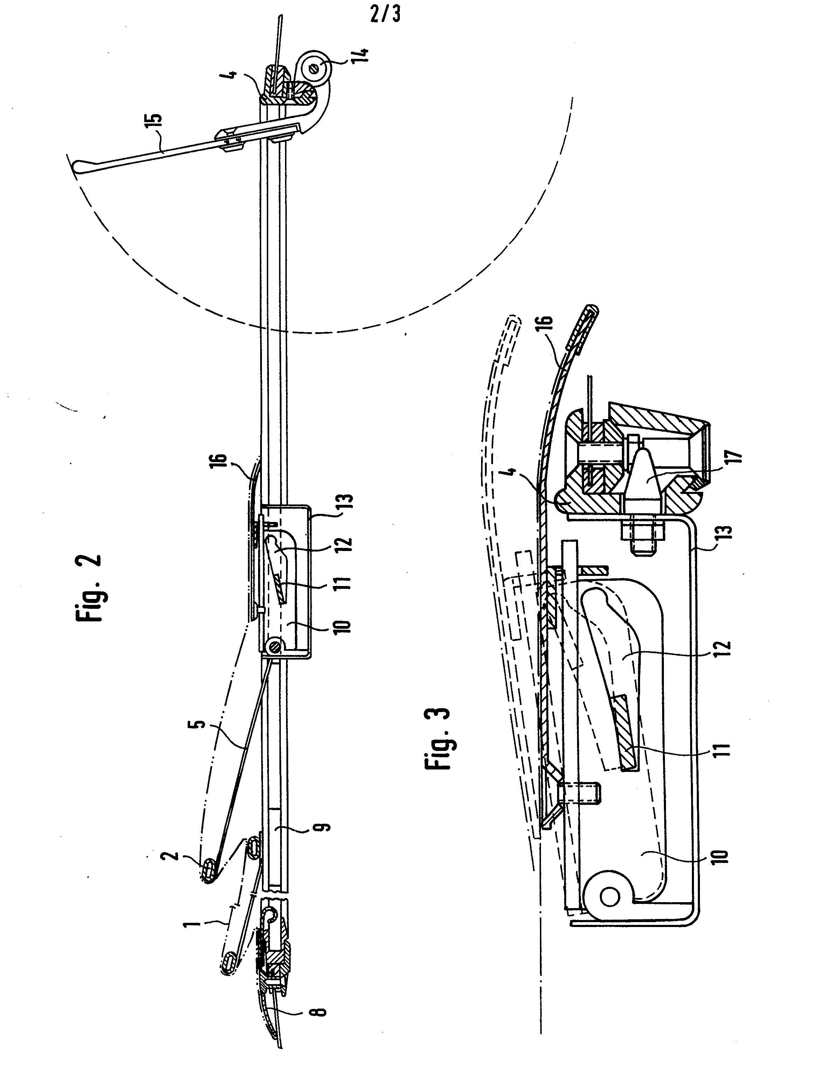

Handle (22) is then moved downwards, whereupon it rotates about its swivel and causes connecting strip (21) to be pulled, which in turn pulls thruster (19) in its guide body (20), which shifts link pieces (18 and 26), so that eccentric parts (11) each turn in the opposite direction from one another.   Rotation of eccentric parts (11) causes travel of the claws (25) in the direction required to release them from their housings,and said rotation also tips the front movable plate (16) to lift it off the vehicle roof, which it does due to the oblique setting of slots (12) in angle bars (10), these being the slide surfaces for travel of the protrusions of eccentric parts (11).   (See Figure 3).

Once the above motions have been accomplished, the mechanism case (13), together with the flexible material strip (1) can be freely moved rearwards in order to open the sliding roof.

During this opening motion, the rod (2), which is linked to mechanism case (13), travels over the neighbouring one which is attached to sliding blocks (9), so that a fold is made in the flexible strip (1).   As such rearward motion proceeds, the strip (1) pulls the next rod (2) attached to the sliding blocks (9), and when this moves, the neighbouring one moves too, through their connecting links (5), until said neighbouring rod travels over the rear stationary plate (8) and thus causes yet another fold to take place in the flexible strip (1), whereupon this rod as well as the aforementioned one, become positioned over the rear of the opening.

To position the sliding roof, handle (22) is moved until it is inserted inside its housing in the mechanism

0010825

case (13), whereupon the front moving plate (16) will travel downwards so that with the pressure it exerts on the frame (4), it will prevent any closing motion thereof, and secure it in the position in which it is set.

To close the sliding roof, mechanism case (13) is moved until studs (17) are inserted in their appropriate holes provided on the front member of the frame (4), it then only being necessary to move the handle (22) into its concealed position so that claws (25) engage in their housings, while front moving plate (16) is folded onto the roof for sealing, which is completed by tautening of cords (6) to achieve tightness along the sides.

In order to adjust the flow of air that enters the vehicle when the roof window is open, said window is provided with the wind deflector plate (15) which is hinged to the front edge of the frame (4). The hinges are such as to allow the wind deflector (15) to be set at any position as desired, and in this way the adjustment thereof is very simple.

- 9 -

0010825

## C L A I M S

1.   A vehicle sliding roof characterised by a rectangular frame (4) over which extends a strip (1) of flexible material, this material being supported by transverse rods (2) and attached at its rear edge to a plate (8) that is secured to the frame (4), while its front edge is attached to a movable plate (16) linked to opening and closing mechanisms which are provided with means whereby said movable plate (16) can be released from and secured to steel bodywork of the vehicle.

2.   A vehicle sliding roof as claimed in claim 1 characterised in that sections from which the frame (4) is constructed are shaped in such a way as to allow their outer edge to be hermetically sealed to the vehicle roof steel bodywork, while innermost edges of the side members of the frame are shaped with guide slots and a front member is suitably slotted to accommodate travelling pieces attached to the closing mechanism case (13).

3.    A vehicle sliding roof as claimed in claim 1 or claim
2 characterised in that the transverse rods (2) which together with the front movable plate (16) and the mechanism
case (13), support the flexible material strip (1), are
free and are linked by means of strips (5) to others of the
guided rods (2) and to the mechanism case (13), for which
purpose said rods (2) and mechanism case (13) are fitted
with sliding blocks (9) which are accommodated in the guides
of the side members of the frame (4) and where moreover,
the flexible material strip (1) is additionally held by
means of cords (6) which, being housed inside the edges
of said strip (1) and stretching between the stationary
plate (8) and the movable plate (16), allow said strip (1)
to be tautened when closed so as to achieve a tight seal
while it is supported by the rods (2), and where in the
opening motion of the assembly, the mechanism case (13) and
the guided rods (2) are drawn towards one another, while
the free rods (2) travel so as to make folds or loops in
the flexible material strip (1).

4.    A vehicle sliding roof as claimed in any one of the
preceding claims characterised in that the opening and
closing mechanisms and the means for securing and releasing
it are externally comprised of an operating handle (22)
which, upon acting against a thruster (19) and against
connection pieces (21) attached thereto, causes eccentric
travel of pieces (11), each one of which is provided with
a pivoted claw (25) protruding from the front of the mech-
anism case (13) and with a protrusion which travels along
an oblique slot (12) in pivoted angle pieces (10) inside the
case (13) to which the front movable plate (16) attached to
the flexible material strip (1) is secured, so that when
said handle (22) is moved, the eccentric pieces (11) shift
and hence the claws (25) on the front movable plate (16)
travel at the same time, either in the direction for them to
engage and for the plate to descend, or in the opposite

0010825

direction, depending upon whether it is intended to secure
the roof or not.

5.    A vehicle sliding roof as claimed in any one of the
preceding claims, characterised in that a wind deflector
plate (15) is hingedly mounted to the front of the frame
(4) and can be positioned at will so as to act as a wind
deflector and thus adjust the flow of air into the vehicle.

6.    A vehicle sliding roof substantially as hereinbefore
described with reference to and as shown in the accompanying
drawings.

**Fig. 1**

0010825

Fig. 2

Fig. 3

26

25

11 10 17

24

18 19 20 21 22

**Fig. 4**

5

25

3/3

**Fig. 6**

10

22

27

28

22

27 25

**Fig. 5**

0010825

European Patent Office

**EUROPEAN SEARCH REPORT**

0010825

Application number

EP 79 30 0360

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | GB - A - 989 694 (WEATHERSHIELDS LTD.) <br> * Entire document * <br><br> -- | 1,2,4 | B 60 J 7/06 <br> 7/18 <br> 7/22 |
| X | US - A - 3 683 993 (PERKS) <br> * Entire document * <br><br> -- | 1,2,4 | |
| X | FR - A - 2 324 483 (WEATHERSHIELD LTD.) <br> * Entire document * <br><br> -- | 1,2,4 | **TECHNICAL FIELDS SEARCHED (Int.Cl. ³)** <br><br> B 60 J |
| | DE - A - 807 474 (HAPPICH) <br> * Entire document * <br><br> -- | 1,3 | |
| | DE - A - 887 459 (HAPPICH) <br> * Entire document * <br><br> -- | 1,3 | |
| | CH - A - 213 709 (LANGE) <br> * Entire document * <br><br> -- | 1,3 | |
| | DE - A - 1 084 587 (GOLDE) <br> * Entire document * <br><br> -- | 1,3 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | GB - A - 841 467 (BAIER) <br> * Entire document * <br><br> ---- | 1,5 | |
| | | | &: member of the same patent family, corresponding document |

The present search report has been drawn up for all claims

| Place of search | Date of completion of the search | Examiner |
|---|---|---|
| The Hague | 07-02-1980 | PETERS |

EPO Form 1503.1  06.78